# FASCICULE DE BREVET EUROPEEN

(11) **EP 4 004 606 B1**
(45) Date de publication et mention de la délivrance du brevet: **30.08.2023**
(21) Numéro de dépôt: 20757641.4
(22) Date de dépôt: 24.07.2020
(51) Int. Cl.: G01T 3/00, G01T 3/06

(54) **SYSTÈME D'ANALYSE DE COLIS DE DÉCHETS RADIOACTIFS ET PROCÉDÉ D'ANALYSE ASSOCIÉ**
GERÄT ZUR ANALYSE VON RADIOAKTIVEN ABFALLBEHÄLTERN UND ENTSPRECHENDES ANALYSEVERFAHREN
SYSTEM FOR THE ANALYSIS OF RADIOACTIVE WASTE DRUMS AND ASSOCIATED ANALYSIS METHOD

(30) Priorité: 29.07.2019 FR 1908613
(43) Date de publication de la demande: 01.06.2022
(73) Titulaire: Commissariat à l'Energie Atomique et aux Energies Alternatives, 75015 Paris (FR)
(72) Inventeur: DUFOUR, Nicolas, 91140 VILLEBON-SUR-YVETTE (FR); SARI, Adrien, 94220 CHARENTON-LE-PONT (FR); FRANGVILLE, Camille, 77130 VILLE SAINT JACQUES (FR)
(74) Mandataire: Brevalex
(86) Numéro de dépôt international: PCT/FR2020/051358
(87) Numéro de publication internationale: WO 2021/019165

(56) Documents cités:
- WO-A1-2015/110631
- WO-A1-2019/025479
- FR-A1- 2 719 138

## Description

### DOMAINE TECHNIQUE

La présente invention concerne un système d'analyse de colis de déchets radioactifs comprenant une source de neutrons, le système d'analyse comportant une pluralité de dispositifs de détection et un calculateur.

L'invention concerne également un procédé d'analyse et un produit programme d'ordinateur.

L'invention s'applique au domaine de la mesure nucléaire, en particulier à la caractérisation de colis contenant ou susceptibles de contenir des déchets radioactifs.

### ÉTAT DE LA TECHNIQUE ANTÉRIEURE

L'entreposage ou le stockage de déchets radioactifs pose la question de la caractérisation des colis contenant de tels déchets, en particulier des colis contenant des actinides majeurs, notamment du plutonium.

Par « caractérisation » d'un colis de déchets radioactifs, il est entendu, au sens de la présente invention, la quantification de la matière nucléaire présente dans ledit colis, c'est-à-dire la mesure des masses et/ou des débits de dose de certains radionucléides présents dans le colis, ainsi que la localisation de la matière nucléaire dans le colis. De façon optionnelle, une telle caractérisation comprend également la détermination d'informations relatives à une matrice du colis, par exemple relatives à une composition de la matrice.

Dans ce cadre, il est connu d'exposer un tel colis à des rayonnements X ou γ et de déterminer une position de la matière nucléaire dans le colis par une analyse des rayonnements X ou γ qui ont traversé le colis (procédé appelé « radiographie »), ou encore d'effectuer une analyse par tomographie des rayonnements γ émis par photofission par la matière nucléaire dans le colis, ladite photofission ayant été déclenchée par l'exposition du colis précédemment décrite.

En outre, il est connu de déterminer la quantité de matière nucléaire dans le colis par une analyse de la quantité de neutrons s'échappant du colis. De tels neutrons résultent :
- dans le cas d'une mesure neutronique passive, de réactions de fission spontanées de la matière nucléaire présente dans le colis ;
- dans le cas d'une mesure par interrogation neutronique active (également appelée INA), de réactions de fission induites par irradiation du colis au moyen de neutrons issus d'une source de neutrons ;

Le document FR2719238, p.e., divulgue un système d'analyse de colis de déchets radioactifs comprenant une source de neutrons. Le document divulgue également une pluralité de détecteurs de neutrons thermiques et une interrogation active ou passive du colis pour déterminer la masse de la matière fissile par coïncidences.
- dans le cas d'une mesure par interrogation photonique active (également appelée IPA), de réactions de fission induites par l'irradiation du colis au moyen de photons issus d'une source de photons. Dans ce cas, l'expression « réactions de photofission » est également employée.

Néanmoins, un tel procédé de caractérisation ne donne pas entière satisfaction.

En effet, un tel procédé de caractérisation, lorsqu'il vise à la fois à quantifier la matière nucléaire présente dans le colis et à la localiser en son sein, repose sur le recours à deux types d'instruments dédiés distincts, ce qui se traduit par un encombrement non satisfaisant et des difficultés de mise en oeuvre et d'utilisation.

Un but de l'invention est donc de proposer un système d'analyse qui soit plus compact et plus simple à réaliser et à utiliser, tout en fournissant des informations à la fois sur la quantité de matière nucléaire présente dans un colis de déchets radioactifs et sur la localisation de la matière nucléaire dans ce dernier.

### EXPOSÉ DE L'INVENTION

A cet effet, l'invention a pour objet un système d'analyse du type précité, selon la revendication 1.

En effet, grâce à la détection, d'une part, de neutrons de fission rapides, et, d'autre part, de neutrons de fission thermalisés (qui sont des neutrons de fission rapides ayant subi une thermalisation due à la matrice du colis), une information sur la localisation de la matière nucléaire est obtenue. Ceci découle du fait que, dans la matrice, la thermalisation des neutrons de fission dépend du nombre d'interactions que subissent lesdits neutrons au cours de leur trajet à partir de leur point d'émission (c'est-à-dire la matière nucléaire), avant de s'échapper du colis. Or, plus l'épaisseur de matrice traversée par un neutron rapide est élevée, plus la probabilité qu'un neutron rapide interagisse davantage dans la matrice et s'échappe du colis en ayant étant thermalisé est importante. Il en résulte que l'identification, au niveau des détecteurs, des neutrons de fission rapides et des neutrons de fissions thermalisés fournit une information quant à la longueur traversée par les neutrons dans la matrice, et donc une information quant à la position de la matière nucléaire dans le colis.

En outre, l'obtention d'informations relatives au nombre de neutrons de fissions parvenant aux détecteurs, éventuellement couplée à la connaissance de la position de la matière nucléaire dans le colis, autorise une quantification de la matière nucléaire présente dans le colis.

Par conséquent, un tel système d'analyse est susceptible de fournir des informations à la fois sur la quantité de matière nucléaire présente dans un colis de déchets radioactifs et sur la localisation de la matière nucléaire dans ce dernier, et ce sans recourir à des instruments distincts dédiés respectivement à chacune de ces grandeurs.

Suivant d'autres aspects avantageux de l'invention, le système d'analyse comporte une ou plusieurs des caractéristiques telles que revendiquées dans les revendications dépendantes, prise(s) isolément ou suivant toutes les combinaisons techniquement possibles.

En outre, l'invention a pour objet un procédé d'analyse de colis de déchets radioactifs comprenant une source de neutrons, selon la revendication 9.

En outre, l'invention a pour objet un produit programme d'ordinateur selon la revendication 10.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
[Fig. 1] la figure 1 est une représentation schématique d'un système d'analyse selon l'invention ;
[Fig. 2] la figure 2 est une vue de dessus schématique d'une couronne de détection du système d'analyse de la figure 1 ;
[Fig. 3] la figure 3 est une vue de côté schématique et partielle de plusieurs couronnes de détection empilées du système d'analyse de la figure 1, deux dispositifs de détection opposés de chaque couronne de détection étant représentés ;
[Fig. 4] la figure 4 est une distribution de Rossi-alpha pour des neutrons rapides, obtenue à partir du signal de détection délivré par un dispositif de détection sensible aux neutrons rapides du système d'analyse de la figure 1 ;
[Fig. 5] la figure 5 est une distribution de Rossi-alpha pour des neutrons thermiques, obtenue à partir du signal de détection délivré par un dispositif de détection sensible aux neutrons thermiques du système d'analyse de la figure 1 ; et
[Fig. 6] la figure 6 est un graphique illustrant deux distributions de Rossi-alpha pour des neutrons rapides, chacune obtenue à partir des signaux de détection délivrés par les dispositifs de détection du système d'analyse de la figure 1, chaque distribution étant associée à un colis respectif, les colis ne différant que par la matière dont est formée leur matrice.

### DESCRIPTION DÉTAILLÉE

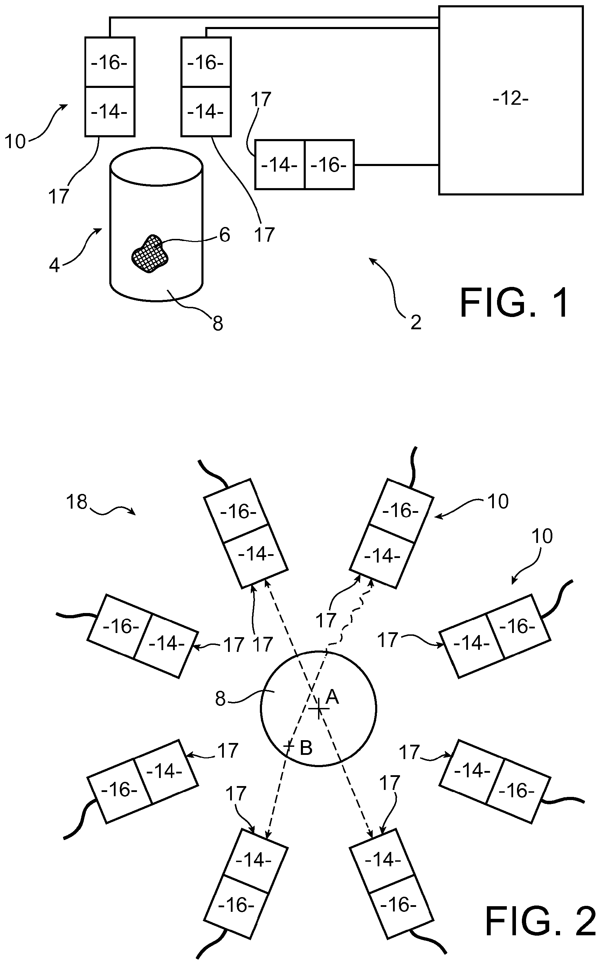

Un système 2 d'analyse de colis de déchets radioactifs selon l'invention est illustré par les figures 1 à 3.

Le système d'analyse 2 est, en particulier, destiné à caractériser des colis 4 de déchets radioactifs. Notamment, le système d'analyse 2 est configuré pour localiser, au sein du colis 4, la matière nucléaire 6 stockée dans celui-ci. Par la suite, la matière nucléaire 6 sera également désignée par « source 6 » de neutrons.

De façon avantageuse, le système d'analyse 2 est également configuré pour déterminer des informations relatives à une matrice 8 encapsulant la matière nucléaire 6, dans le colis 4.

De préférence, le système d'analyse 2 est, en outre, configuré pour déterminer une quantité de matière et/ou une masse de la matière nucléaire 6 dans le colis 4.

Le système d'analyse 2 comporte une pluralité de dispositifs de détection 10 et un calculateur 12 relié en sortie de chaque dispositif de détection 10.

Chaque dispositif de détection 10 est configuré pour détecter des neutrons issus de la source 6, et pour fournir en sortie un signal électrique de détection représentatif d'une telle détection. En outre, le calculateur 12 est configuré pour déterminer, à partir du signal de détection disponible en sortie de chaque dispositif de détection 10, les informations permettant la caractérisation du colis 4.

Plus précisément, chaque dispositif de détection 10 est configuré pour détecter des neutrons rapides et/ou des neutrons thermiques. En particulier, chaque dispositif de détection 10 est configuré de sorte que le signal de détection qu'il délivre comprenne des impulsions chacune représentative de la détection d'un neutron respectif.

Par « neutron rapide », il est entendu, au sens de la présente invention, un neutron présentant une énergie de l'ordre de 1 MeV (mégaélectronvolt) ou plus. Sur les figures, les neutrons rapides sont schématiquement représentés par des flèches droites.

Par « neutron thermique », il est entendu, au sens de la présente invention, un neutron à l'équilibre thermodynamique avec son milieu, l'énergie la plus probable du neutron thermique dépendant de la température du milieu. Par exemple, l'énergie la plus probable d'un neutron thermique vaut environ 0,025 eV (électronvolt) dans un milieu à 20°C (degré Celsius), et environ 0,028 eV à 77°C. Sur les figures, les neutrons thermiques sont schématiquement représentés par des flèches présentant une extrémité ondulée.

Par exemple, chaque dispositif de détection 10 comprend un ou plusieurs détecteurs 14 et un organe de numérisation 16.

Chaque détecteur 14 est configuré pour délivrer un signal électrique comprenant des impulsions chacune représentative de la détection d'un neutron respectif incident sur une face d'entrée 17 du détecteur 14. L'organe de numérisation 16 est relié en sortie de chaque détecteur 14 du dispositif de détection 10 correspondant, et est propre à numériser le signal délivré par chaque détecteur 14 correspondant, éventuellement après l'avoir amplifié et/ou filtré, pour former le signal de détection associé au dispositif de détection 10.

Chaque dispositif de détection 10 comprend, par exemple, un détecteur 14 de neutrons rapides et un détecteur 14 de neutrons thermiques, par exemple agencés côte à côte, de sorte que le dispositif de détection 10 soit avantageusement sensible à la fois aux neutrons rapides et aux neutrons thermiques. Dans ce cas, le détecteur 14 de neutrons rapides est configuré pour détecter uniquement des neutrons rapides, tandis que le détecteur 14 de neutrons thermiques est configuré pour détecter uniquement des neutrons thermiques.

Par exemple, le détecteur 14 de neutrons thermiques est un détecteur dopé au gadolinium (par exemple, au gadolinium 155 ¹⁵⁵Gd, ou au gadolinium 157 ¹⁵⁷Gd), au bore (par exemple, au bore 10 ¹⁰B), ou encore au lithium (par exemple, au ⁶Li). Dans ce dernier cas, il est fait recours, pour la détection d'un neutron, à la réaction n + ⁶Li qui entraîne l'émission d'une particule α, n désignant ici un neutron.

Par exemple encore, le détecteur 14 de neutrons rapides est un détecteur à scintillateur liquide ou plastique.

En variante, le détecteur 14 de neutrons rapides est un détecteur sensible dans une plage d'énergie correspondant à celle des neutrons thermiques, et devant la face d'entrée 17 duquel est placé un modérateur de neutrons configuré pour abaisser l'énergie des neutrons incidents de sorte que les neutrons rapides parvenant à la face d'entrée 17 du détecteur 14 présentent, après avoir traversé le modérateur de neutrons, une énergie appartenant à la plage d'énergie dans laquelle ledit détecteur 14 est sensible. Par exemple, un tel détecteur 14 de neutrons rapides comprend une cellule à hélium 3 ³He agencée dans un bloc de polyéthylène, lui-même enrobé d'une couche de cadmium. Dans ce cas, le bloc de polyéthylène joue le rôle de modérateur destiné à thermaliser des neutrons rapides incidents avant leur interaction avec l'hélium 3 de la cellule, ce dernier étant sensible aux neutrons thermiques uniquement. En outre, la couche de cadmium agit comme un filtre pour les neutrons thermiques incidents, et empêche leur passage dans le bloc de polyéthylène, un tel passage étant susceptible de provoquer des détections indésirables au niveau de la cellule à hélium 3.

Selon une autre variante, le dispositif de détection 10 comprend un unique détecteur 14 configuré pour détecter à la fois des neutrons thermiques et des neutrons rapides.

Les dispositifs de détection 10 sont agencés de sorte que les faces d'entrée 17 de leurs détecteurs 14 respectifs soient orientées vers un même volume d'intérêt prédéterminé. Un tel volume d'intérêt est destiné à recevoir au moins en partie le colis 4.

Avantageusement, tout ou partie des dispositifs de détection 10 sont agencés de sorte que les faces d'entrée 17 de leurs détecteurs 14 soient à équidistance d'un point prédéterminé du volume d'intérêt prédéterminé.

De préférence, les dispositifs de détection 10 sont agencés suivant au moins un arc dont une concavité est orientée vers le volume d'intérêt. De préférence encore, et comme cela ressort de la figure 2, au moins une partie des dispositifs de détection 10 sont agencés en anneau pour former une couronne de détection 18 délimitant radialement le volume d'intérêt. Dans ce cas, la couronne de détection 18 présente un axe, noté Z-Z sur cette figure, les dispositifs de détection 10 de la couronne 18 étant avantageusement agencés dans un plan.

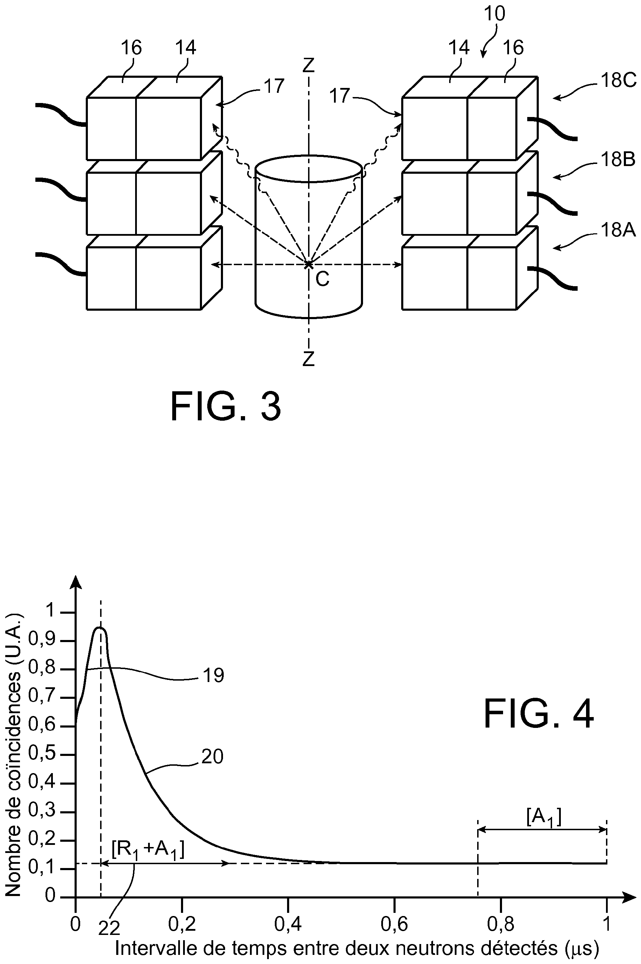

De préférence encore, et comme illustré par la figure 3, les dispositifs de détection 10 sont agencés pour former une pluralité de couronnes de détection 18, les dispositifs de détection 10 d'une couronne de détection donnée étant distincts des dispositifs de détection 10 d'une autre couronne de détection. Dans ce cas, les couronnes de détection 18 sont avantageusement coaxiales et non concentriques. Avantageusement, les dispositifs de détection 10 d'une même couronne de détection sont agencés de sorte que les faces d'entrée 17 de leurs détecteurs 14 soient à équidistance d'un même point correspondant du volume d'intérêt prédéterminé, les points correspondant aux couronnes de détection 18 appartenant, par exemple, à l'axe Z-Z commun.

La chaîne de numérisation 16 est connue en soi, et ne sera pas décrite davantage.

Comme indiqué précédemment, le calculateur 12 est configuré pour déterminer les informations permettant la caractérisation du colis 4 à partir du signal de détection disponible en sortie de chaque dispositif de détection 10.

Plus précisément, pour chaque signal de détection, le calculateur 10 est configuré pour déterminer si chaque impulsion correspond à un neutron thermique ou à un neutron rapide. En outre, le calculateur 10 est avantageusement configuré pour rejeter les impulsions qui seraient dues à d'autres phénomènes, par exemple dues à la détection de photons γ.

Par exemple, dans le cas où le dispositif de détection 10 comprend un détecteur 14 sensible aux seuls neutrons thermiques et un détecteur 14 sensible aux seuls neutrons rapides, le calculateur 10 est configuré pour attribuer à des détections de neutrons rapides les impulsions provenant du détecteur 14 sensible aux seuls neutrons rapides, et pour attribuer à des détections de neutrons thermiques les impulsions provenant du détecteur 14 sensible aux seuls neutrons thermiques. Dans ce cas, si l'un au moins des détecteurs 14 est également sensible aux photons γ, le calculateur 12 est configuré pour identifier les impulsions dues aux photons γ par une analyse de la forme des impulsions, afin de rejeter lesdites impulsions.

Selon un autre exemple, dans le cas où le dispositif de détection 10 comprend un détecteur 14 sensible à la fois aux neutrons thermiques et aux neutrons rapides, le calculateur 12 est, par exemple, configuré pour déterminer le phénomène à l'origine de chaque impulsion par une analyse de la forme de l'impulsion. Dans ce cas, si le détecteur 14 est également sensible aux photons y, le calculateur 12 est configuré pour mettre en oeuvre ladite analyse de la forme des impulsions pour identifier les impulsions dues aux photons y, afin de rejeter lesdites impulsions.

En outre, le calculateur 12 est configuré pour déterminer la contribution de neutrons de fission et de neutrons parasites au signal de détection délivré par chaque dispositif de détection.

Par « neutron de fission », il est entendu, au sens de la présente invention, un neutron directement issu d'une réaction de fission nucléaire. De tels neutrons sont, en très grande majorité (environ 99%), des neutrons rapides. En outre, une même réaction de fission libère généralement une pluralité de neutrons.

De telles réactions de fission sont :
- dans le cas d'une mesure passive, des réactions de fission spontanées ;
- dans le cas d'une mesure par interrogation neutronique active (également appelée INA), des réactions de fission résultant de l'irradiation du colis 4 par des neutrons issus d'une source de neutrons ;
- dans le cas d'une mesure par interrogation photonique active (également appelée IPA), des réactions de fission résultant de l'irradiation du colis 4 par des photons issus d'une source de photons. Dans ce cas, l'expression « réactions de photofission » est également employée.

Par « neutrons parasites », il est entendu, au sens de la présente invention, des neutrons provenant de réactions (α, n). De telles réactions (α, n) ne sont pas considérées comme des réactions de fission, et son généralement dues aux interactions entre particules α issues de la désintégration d'actinides dans la source 6 et d'éléments légers susceptibles d'être présents dans le colis 4, en particulier dans la matrice 8, tels que le béryllium, le bore, le carbone, l'oxygène, le fluor, etc. Une réaction (α, n) libère un seul neutron.

L'énergie moyenne d'un neutron parasite dépend notamment de l'élément léger impliqué la réaction (α, n). Par exemple, un neutron parasite issu d'une réaction (α, n) mettant en jeu du béryllium présente, en moyenne, une énergie de 4 MeV. Selon un autre exemple, un neutron parasite issu d'une réaction (α, n) mettant en jeu du lithium présente, en moyenne, une énergie de 470 keV (kiloélectronvolt).

Les neutrons parasites contribuent à un signal neutronique de bruit non exploitable pour la caractérisation du colis 4.

En particulier, le calculateur 12 est configuré de façon à, pour au moins un dispositif de détection 10, déterminer une première distribution de Rossi-alpha, à partir des impulsions correspondant aux neutrons rapides seuls dans le signal de détection délivré par ledit dispositif de détection 10.

En outre, le calculateur 12 est configuré de façon à, pour au moins un dispositif de détection 10, déterminer une deuxième distribution de Rossi-alpha, à partir des impulsions correspondant aux neutrons thermiques seuls dans le signal de détection délivré par ledit dispositif de détection 10.

De façon connue, une distribution de Rossi-alpha est un histogramme du nombre de coïncidences neutroniques en fonction de l'intervalle de temps qui sépare deux détections. Pour un intervalle de temps donné, il est entendu, par « coïncidence neutronique », deux détections de neutrons qui sont séparées dans le temps par une durée égale audit intervalle. Par la suite, les expressions « coïncidence », « coïncidence neutronique », « coïncidences de détection » ou « coïncidence de détection de neutrons » présenteront le même sens.

Sur la figure 4 est représenté un exemple d'une première distribution de Rossi-alpha, associée aux seuls neutrons rapides, et obtenue à partir du signal de détection délivré par un dispositif de détection 10 donné quelconque.

L'échelle de temps (abscisses) est en microsecondes pour des détecteurs 14 configurés pour détecter directement des neutrons rapides. Toutefois, pour des détecteurs configurés pour thermaliser les neutrons rapides avant de détecter les neutrons thermiques en résultant, l'échelle de temps aurait été en millisecondes.

Comme cela apparaît sur cette figure, la première distribution de Rossi-alpha comprend, outre la partie initiale croissante 19 (dont il n'est pas tenu compte), deux contributions : une partie exponentielle décroissante 20, attribuable à des coïncidences réelles, et une ligne de base 22, attribuable à des coïncidences accidentelles.

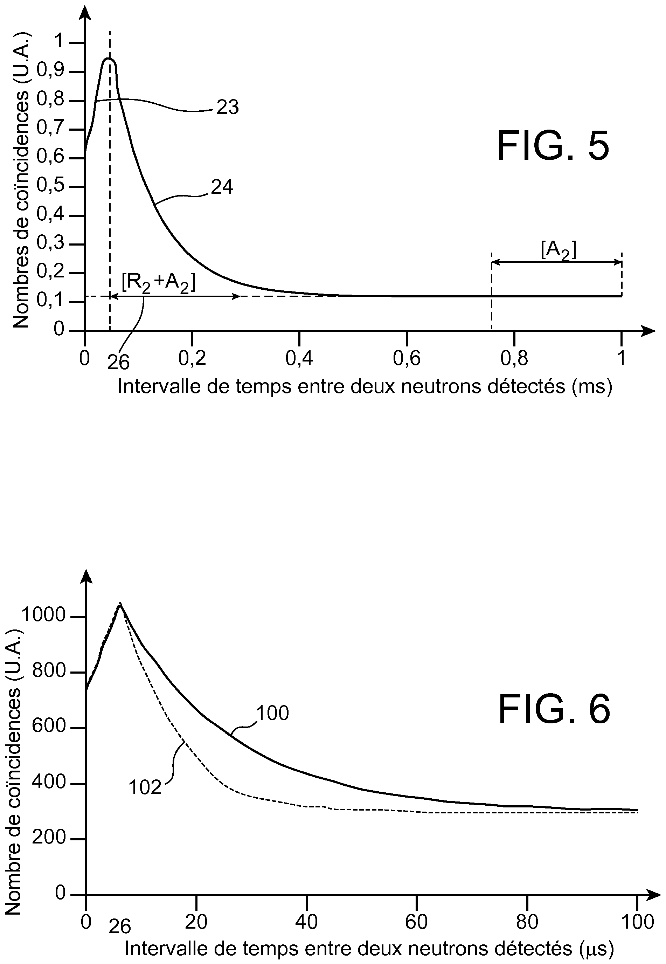

De la même façon, sur la figure 5 est représenté un exemple d'une deuxième distribution de Rossi-alpha, associée aux seuls neutrons thermiques, et obtenue à partir du signal de détection délivré par un dispositif de détection 10 donné quelconque.

L'échelle de temps (abscisses) est en millisecondes.

Comme cela apparaît sur cette figure, la deuxième distribution de Rossi-alpha comprend, outre la partie initiale croissante 23 (dont il n'est pas tenu compte), deux contributions : une partie exponentielle décroissante 24, attribuable à des coïncidences réelles, et une ligne de base 26, attribuable à des coïncidences accidentelles.

Les coïncidences réelles correspondent à la détection de deux neutrons corrélés, c'est-à-dire deux neutrons émis par la même réaction de fission. En outre, les coïncidences accidentelles correspondent à la détection de deux neutrons non corrélés (c'est-à-dire deux neutrons ne provenant pas de la même réaction de fission), en particulier à la détection de neutrons parasites, les réactions (α, n) conduisant à l'émission d'un seul neutron, comme cela a été indiqué précédemment. Les coïncidences réelles sont plus probables pour de faibles intervalles de temps séparant deux détections de neutrons, tandis que les coïncidences accidentelles sont équiprobables, quel que soit l'intervalle de temps séparant deux neutrons détectés.

Pour déterminer le nombre de coïncidences réelles de neutrons rapides, dit « premier nombre de coïncidences », le calculateur 12 est configuré pour déterminer, à partir de la première distribution de Rossi-alpha, un nombre de coïncidences conjointes de neutrons rapides et un nombre de coïncidences accidentelles de neutrons rapides, et pour affecter au premier nombre de coïncidences le résultat de la différence entre le nombre de coïncidences conjointes de neutrons rapides et le nombre de coïncidences accidentelles de neutrons rapides.

« Par coïncidences conjointes », il est entendu, au sens de la présence invention, des coïncidences de détection qui sont indifféremment des coïncidences réelles ou des coïncidences accidentelles.

Pour ce faire, le calculateur 12 est, de préférence, configuré pour soustraire, au nombre de coïncidences de détection dénombrées dans une première fenêtre de mesure prédéterminée [R₁+A₁] de la première distribution de Rossi-alpha (qui constitue le nombre de coïncidences conjointes de neutrons rapides), le nombre de coïncidences de détection dénombrées dans une première fenêtre témoin [A₁] de même largeur que la première fenêtre de mesure [R₁+A₁] (qui constitue le nombre de coïncidences accidentelles de neutrons rapides), le résultat obtenu étant le premier nombre de coïncidences.

De façon similaire, pour déterminer le nombre de coïncidences réelles de neutrons thermiques, dit « deuxième nombre de coïncidences », le calculateur 12 est configuré pour déterminer, à partir de la deuxième distribution de Rossi-alpha, un nombre de coïncidences conjointes de neutrons thermiques et un nombre de coïncidences accidentelles de neutrons thermiques, et pour affecter au deuxième nombre de coïncidences le résultat de la différence entre le nombre de coïncidences conjointes de neutrons thermiques et le nombre de coïncidences accidentelles de neutrons thermiques.

Pour ce faire, le calculateur 12 est, de préférence, configuré pour soustraire, au nombre de coïncidences de détection dénombrées dans une deuxième fenêtre de mesure prédéterminée [R₂+A₂] de la deuxième distribution de Rossi-alpha (qui constitue le nombre de coïncidences conjointes de neutrons thermiques), le nombre de coïncidences de détection dénombrées dans une deuxième fenêtre témoin [A₂] de même largeur que la deuxième fenêtre de mesure [R₂+A₂] (qui constitue le nombre de coïncidences accidentelles de neutrons thermiques), le résultat obtenu étant le deuxième nombre de coïncidences.

De préférence, la première et la deuxième fenêtre de mesure sont choisies au début des parties décroissantes 20, 24 des distributions de Rossi-alpha correspondantes. En outre, l'abscisse du début de la première et de la deuxième fenêtre témoin est choisi très supérieure, par exemple dix fois supérieure ou plus, à l'abscisse du début de la fenêtre de mesure de la distribution de Rossi-alpha correspondante. Ceci est avantageux, dans la mesure où, le nombre de coïncidences réelles diminuant de façon exponentielle ou quasi-exponentielle avec la durée entre impulsions, le nombre de coïncidences réelles, dans la première fenêtre témoin [A₁] et dans la deuxième fenêtre témoin [A₂], est négligeable devant le nombre de coïncidences accidentelles.

Le calculateur 12 est également configuré pour déterminer une position de la source 6 par rapport à un point prédéterminé du système d'analyse 2, à partir du (des) premier(s) nombre(s) de coïncidences et du (des) deuxièmes nombres de coïncidences calculés, par exemple à partir du rapport, dit « rapport de coïncidences », entre le premier nombre de coïncidences et le deuxième nombre de coïncidences associés à chaque dispositif de détection.

Par exemple, si la source 6 est centrée au point A du colis 4 (figure 2) et la matrice 8 homogène, le rapport de coïncidences est sensiblement équivalent pour tous les dispositifs de détections 10. Dans ce cas, le calculateur 12 est configuré pour localiser la source 6 au niveau de l'axe Z-Z de la couronne de détection 18, dans le plan de de la couronne de détection 18.

Selon un autre exemple, si la source 6 est excentrée en un point B du colis 4 (figure 2) et la matrice 8 homogène, le rapport de coïncidences varie d'un dispositif de détections 10 à l'autre. En particulier, le rapport de coïncidences décroît à mesure que la distance entre la source 6 et le dispositif de détection 10 augmente. Ceci découle du fait que la matrice 8 joue le rôle de modérateur, les neutrons prompts perdant d'autant plus d'énergie que la distance qu'ils parcourent dans le colis 4, avant d'émerger du colis 4, est grande.

Dans ce cas, le calculateur 12 est configuré pour localiser la source 6, dans le plan de la couronne de détection 18, à partir de la variation du rapport de coïncidences en fonction de la position du dispositif de détection 10.

En outre, dans le cas de la présence d'une pluralité de couronnes de détection 18, le calculateur 12 est également configuré pour déterminer la position de la source 6 le long de l'axe commun Z-Z desdites couronnes de détection 18, outre la position de la source 6 dans un plan orthogonal audit axe commun.

Par exemple, sur la figure 3, le système d'analyse 2 comprend une première couronne de détection 18A, une deuxième couronne de détection 18B et une troisième couronne de détection 18C. L'axe commun des couronnes de détection 18 est orienté, l'origine O étant prise au niveau de la première couronne de détection 18A, la coordonnée suivant l'axe Z-Z étant croissante de la première couronne de détection 18A vers la troisième couronne de détection 18C. En outre, dans cet exemple, la source est localisée au point C, qui est plus proche de la première couronne de détection 18A que de la troisième couronne de détection 18C.

Dans ce cas, le rapport de coïncidences est globalement supérieur pour les dispositifs de détection 10 de la première couronne de détection 18A que pour ceux de la troisième couronne de détection 18C, dans la mesure où les neutrons prompts qui atteignent les dispositifs de détection 10 de la troisième couronne de détection 18C ont parcouru, dans le colis 4, une distant plus grande avant d'émerger du colis 4 que les neutrons prompts qui atteignent les dispositifs de détection 10 de la première couronne de détection 18A.

Par la comparaison des rapports de détection associés aux différents dispositifs de détection 10 d'une même couronne de détection 18, et aux dispositifs de détection 10 des couronnes de détection 18 entre elles, le calculateur 12 est configuré pour déterminer la position, dans l'espace, de la source 6.

Avantageusement, afin de déterminer la position de la source 6, le calculateur 12 est également configuré pour mettre en oeuvre un procédé de simulation numérique (par exemple une pluralité de simulations Monte-Carlo, ou un algorithme MLEM, de l'anglais « *Maximum Likelihood Expectation-Maximisation* », pour algorithme espérance-maximisation), ou encore pour mettre en oeuvre des informations *a priori* sur le colis 4 (par exemple des résultats préliminaires d'imagerie du colis 4, notamment par radiographie X ou gamma ou tomographie gamma, ou encore des informations fournies par le producteur du colis 4).

En outre, le calculateur 12 est configuré pour déterminer, à partir du premier nombre de coïncidences et/ou du deuxième nombre de coïncidences, la masse et/ou le débit de dose de la matière nucléaire 6 dans le colis 4, avantageusement en exploitant les informations de position déterminées.

Par exemple, afin de quantifier la matière nucléaire 6, le calculateur 12 est configuré pour mettre en oeuvre des données d'étalonnage préalablement établies associant, pour au moins un dispositif de détection 10, le premier nombre de coïncidences et/ou le deuxième nombre de coïncidences correspondants à une masse de matière nucléaire et/ou un débit de dose correspondants, de préférence pour une position donnée de la matière nucléaire 6 dans le colis 4. Par exemple, le calculateur 12 est configuré pour mettre en oeuvre un procédé de simulation numérique (par exemple procédé mettant en oeuvre au moins une simulation Monte-Carlo, ou un algorithme MLEM) afin de quantifier la matière nucléaire 6 à partir du premier nombre de coïncidences et/ou du deuxième nombre de coïncidences mesurés et des données d'étalonnage.

De préférence, le calculateur 12 est configuré pour déterminer des informations sur la matrice 8 par une comparaison, pour chaque dispositif de détection 10, du premier nombre de coïncidences et du deuxième nombre de coïncidences correspondants. Par exemple, le calculateur 12 est configuré pour déterminer de telles informations sur la matrice 8 par une comparaison du rapport de coïncidences avec des données de configuration préalablement établies.

Selon un autre exemple, le calculateur 12 est également configuré pour déterminer des informations sur la matrice 8 à partir des constantes des parties exponentielles décroissantes 20, 24 des distributions de Rossi-alpha.

Par exemple, sur la figure 6 sont représentées une distribution de Rossi-alpha 100 pour des neutrons rapides obtenue à partir d'un premier colis, et une distribution de Rossi-alpha 102 pour des neutrons rapides obtenue à partir d'un deuxième colis, les colis ne différant que par la matière dont est formée leur matrice. Il apparaît que les parties exponentielles décroissantes de ces distributions ne présentent pas la même constante de décroissance. Il en résulte que le calcul du coefficient de décroissance permet de déterminer des informations sur la matrice 8, par exemple en exploitant des données issues d'un étalonnage.

Plus précisément, le nombre de coïncidences de détection de neutrons rapides est plus important sur la distribution de Rossi-alpha 100 par rapport à la distribution de Rossi-alpha 102. Ceci indique que la première matrice ayant conduit à la courbe 100 présente un pouvoir thermalisant plus faible que la deuxième matrice ayant conduit à la courbe 102.

Inversement, dans ce même exemple, les distributions de Rossi-alpha pour des neutrons thermiques présenteraient un nombre de coïncidences de détection plus élevé pour la deuxième matrice par rapport au nombre de coïncidences de détection correspondant à la première matrice.

Le fonctionnement du système d'analyse 2 va maintenant être décrit.

Un colis 4 de déchets radioactifs est mis en présence du système d'analyse 2. En particulier, au moins une partie du colis 4 est agencée dans le volume d'intérêt du système d'analyse 2.

Les neutrons délivrés par la matière nucléaire 6 au sein du colis 4 atteignent tout ou partie des dispositifs de détection 10, chacun délivrant le signal de détection correspondant.

Dans chaque signal de détection reçu en provenance des dispositifs de détection 10, le calculateur 12 détermine si chaque impulsion qu'il comporte est due à un neutron thermique ou à un neutron rapide. En outre, le calculateur 10 rejette les impulsions dues à d'autres phénomènes, par exemple dues à la détection de photons γ.

Puis, le calculateur 12 détermine le nombre de coïncidences réelles de neutrons rapides détectés, après avoir discriminé les coïncidences réelles de neutrons rapides de fission des coïncidences accidentelles dues aux neutrons rapides parasites qui ont été détectés par le dispositif de détection 10. Le calculateur 12 détermine également le nombre de coïncidences réelles de neutrons thermiques détectés, après avoir discriminé les coïncidences réelles de neutrons de fission qui ont été thermalisés dans la matrice 8 des coïncidences accidentelles dues aux neutrons parasites qui ont été thermalisés dans la matrice 8 puis détectés par le dispositif de détection 10.

Puis, le calculateur 12 caractérise le colis à partir des informations calculées.

En particulier, le calculateur 12 détermine la position de la matière nucléaire 6 dans le colis 4 à partir du nombre de coïncidences réelles de neutrons rapides détectés et du nombre de coïncidences réelles de neutrons thermiques détectés correspondant à chaque dispositif de détection 10.

En outre, le calculateur 12 quantifie la matière nucléaire 6 présente dans le colis 4, à partir du nombre de coïncidences réelles de neutrons rapides détectés et/ou du nombre de coïncidences réelles de neutrons thermiques détectés.

Selon une variante, chaque dispositif de détection 10 comprend un unique détecteur 14 configuré pour détecter uniquement des neutrons thermiques ou uniquement des neutrons rapides. Dans ce cas, le calculateur 12 est configuré pour caractériser la matière nucléaire 6 à partir du nombre de coïncidences réelles de neutrons de fission (rapides ou thermiques, selon le dispositif de détection 10 considéré) associés à des groupes prédéterminés de dispositifs de détection 10.

Par exemple, de tels groupes sont des couples de dispositifs de détection 10 voisins, opposés, ou encore agencés à une position prédéterminée l'un par rapport à l'autre. Selon un autre exemple, de tels groupes comprennent tout ou partie des combinaisons de deux ou plus dispositifs de détection 10 du système d'analyse 2, l'un au moins des dispositifs de détection 10 étant sensible aux neutrons thermiques, et l'un au moins des dispositifs de détection 10 étant sensible aux neutrons rapides.

Dans cette variante, le calculateur 12 est, avantageusement, configuré pour déterminer la position de la source 6 par la mise en oeuvre d'un procédé de simulation numérique (par exemple une pluralité de simulations Monte-Carlo, ou un algorithme MLEM, de l'anglais « *Maximum Likelihood Expectation-Maximisation* », pour algorithme espérance-maximisation), ou encore par l'exploitation d'informations *a priori* sur le colis 4 (par exemple des résultats préliminaires d'imagerie du colis 4, notamment par radiographie X ou gamma ou tomographie gamma, ou encore des informations fournies par le producteur du colis 4).

## Revendications

1. Système (2) d'analyse de colis (4) de déchets radioactifs comprenant une source (6) de neutrons, le système d'analyse (2) comportant une pluralité de dispositifs de détection (10) et un calculateur (12), le système d'analyse (2) étant **caractérisé en ce que**
au moins un dispositif de détection (10) est configuré pour détecter des neutrons rapides, et au moins un dispositif de détection (10) est configuré pour détecter des neutrons thermiques, chaque dispositif de détection (10) étant configuré pour délivrer un signal électrique de détection comprenant des impulsions chacune représentative de la détection d'un neutron respectif issu de la source (6),
le calculateur (12) étant configuré pour recevoir le signal de détection délivré par chaque dispositif de détection (10) et pour identifier, dans chaque signal de détection reçu, les impulsions correspondant à des neutrons thermiques et/ou les impulsions correspondant à des neutrons rapides,
le calculateur (12) étant également configuré pour calculer, pour chaque dispositif de détection (10), à partir du signal de détection reçu depuis le dispositif de détection (10), un premier nombre de coïncidences, dépendant du nombre de coïncidences réelles de neutrons rapides de fission détectés par le dispositif de détection (10), et un deuxième nombre de coïncidences, dépendant du nombre de coïncidences réelles de neutrons thermiques de fission détectés par le dispositif de détection (10),
le calculateur (12) étant, en outre, configuré pour déterminer une position de la source (6) par rapport à un point prédéterminé du système d'analyse (2) à partir du premier nombre de coïncidences et du deuxième nombre de coïncidences calculés pour au moins une partie des dispositifs de détection (10).

2. Système d'analyse (2) selon la revendication 1, dans lequel, pour calculer le premier nombre de coïncidences et/ou le deuxième nombre de coïncidences correspondant à chaque dispositif de détection (10), le calculateur (12) est configuré pour :
- à partir du signal de détection reçu depuis le dispositif de détection (10), déterminer une première distribution de Rossi-alpha associée aux impulsions correspondant à des neutrons rapides seuls, et/ou déterminer une deuxième distribution de Rossi-alpha associée aux impulsions correspondant à des neutrons thermiques seuls ; et
- déterminer, à partir de la première distribution de Rossi-alpha, un nombre de coïncidences conjointes de neutrons rapides et un nombre de coïncidences accidentelles de neutrons rapides, et affecter au premier nombre de coïncidences le résultat de la différence entre le nombre de coïncidences conjointes de neutrons rapides et le nombre de coïncidences accidentelles de neutrons rapides ; et/ou
- déterminer, à partir de la deuxième distribution de Rossi-alpha, un nombre de coïncidences conjointes de neutrons thermiques et un nombre de coïncidences accidentelles de neutrons thermiques, et affecter au deuxième nombre de coïncidences le résultat de la différence entre le nombre de coïncidences conjointes de neutrons thermiques et le nombre de coïncidences accidentelles de neutrons thermiques.

3. Système d'analyse selon la revendication 2, dans lequel le calculateur (12) est configuré de façon à :
- pour chaque première distribution de Rossi-alpha, affecter au nombre de coïncidences conjointes de neutrons rapides un nombre de coïncidences de détection dénombrées dans une première fenêtre de mesure prédéterminée ([R₁+A₁]) de la première distribution de Rossi-alpha, et affecter au nombre de coïncidences accidentelles de neutrons rapides un nombre de coïncidences de détection dénombrées dans une première fenêtre témoin ([A₁]) de même largeur que la première fenêtre de mesure ([R₁+A₁]), située au-delà de la première fenêtre de mesure ([R₁+A₁]) ; et
- pour chaque deuxième distribution de Rossi-alpha, affecter au nombre de coïncidences conjointes de neutrons thermiques un nombre de coïncidences de détection dénombrées dans une deuxième fenêtre de mesure prédéterminée ([R₂+A₂]) de la deuxième distribution de Rossi-alpha, et affecter au nombre de coïncidences accidentelles de neutrons thermiques un nombre de coïncidences de détection dénombrées dans une deuxième fenêtre témoin ([A₂]) de même largeur que la deuxième fenêtre de mesure ([R₂+A₂]), située au-delà de la deuxième fenêtre de mesure.

4. Système d'analyse (2) selon l'une quelconque des revendications 1 à 3, dans lequel chaque dispositif de détection (10) comprend au moins un détecteur (14) présentant une face d'entrée (17), chaque face d'entrée (17) étant orientée vers un même volume d'intérêt prédéterminé.

5. Système d'analyse (2) selon la revendication 4, dans lequel au moins une partie des dispositifs de détection (10) sont agencés en anneau pour former une couronne de détection (18) délimitant radialement le volume d'intérêt.

6. Système d'analyse selon la revendication 5, dans lequel les dispositifs de détection (10) sont agencés pour former une pluralité de couronnes de détection (18, 18A, 18B, 18C) délimitant chacune radialement le volume d'intérêt, les dispositifs de détection (10) d'une couronne de détection (18, 18A, 18B, 18C) donnée étant distincts des dispositifs de détection (10) d'une autre couronne de détection (18, 18A, 18B, 18C).

7. Système d'analyse selon la revendication 6, dans lequel les couronnes de détection (18, 18A, 18B, 18C) sont coaxiales et non concentriques.

8. Système d'analyse selon l'une quelconque des revendications 1 à 7, dans lequel le calculateur (12) est également configuré pour déterminer une masse et/ou un débit de dose de la source (6) à partir du premier nombre de coïncidences et/ou du deuxième nombre de coïncidences calculés pour au moins une partie des dispositifs de détection (10).

9. Procédé d'analyse de colis (4) de déchets radioactifs comprenant une source (6) de neutrons, le procédé d'analyse comprenant :
- dans un signal de détection reçu depuis chacun parmi une pluralité de dispositifs de détection (10), au moins un dispositif de détection (10) étant configuré pour détecter des neutrons rapides, et au moins un dispositif de détection (10) étant configuré pour détecter des neutrons thermiques, chaque signal de détection comprenant des impulsions chacune représentative de la détection d'un neutron respectif issu de la source (6), identifier les impulsions correspondant à des neutrons thermiques et/ou les impulsions correspondant à des neutrons rapides ;
- calculer, pour chaque dispositif de détection (10), à partir du signal de détection reçu depuis le dispositif de détection (10), un premier nombre de coïncidences, dépendant du nombre de coïncidences réelles de neutrons rapides de fission détectés par le dispositif de détection (10), et un deuxième nombre de coïncidences, dépendant du nombre de coïncidences réelles de neutrons thermiques de fission détectés par le dispositif de détection (10) ; et
- déterminer une position de la source (6) par rapport à un point prédéterminé à partir du premier nombre de coïncidences et du deuxième nombre de coïncidences calculés pour au moins une partie des dispositifs de détection (10).

10. Produit programme d'ordinateur comprenant des instructions de code de programme qui, lorsqu'elles sont exécutées par un ordinateur, mettent en oeuvre le procédé d'analyse selon la revendication 9.

## Patentansprüche

1. Analysesystem (2) für Gebinde (4) mit radioaktiven Abfällen, die eine Neutronenquelle (6) umfassen, wobei das Analysesystem (2) eine Vielzahl von Detektionsvorrichtungen (10) und einen Rechner (12) umfasst, wobei das Analysesystem (2) **dadurch gekennzeichnet ist, dass**
mindestens eine Detektionsvorrichtung (10) dazu konfiguriert ist, schnelle Neutronen zu detektieren, und mindestens eine Detektionsvorrichtung (10) dazu konfiguriert ist, thermische Neutronen zu detektieren, wobei jede Detektionsvorrichtung (10) dazu konfiguriert ist, ein elektrisches Detektionssignal zu liefern, das jeweils repräsentative Impulse der Detektion eines jeweiligen aus der Quelle (6) stammenden Neutrons umfasst,
wobei der Rechner (12) dazu konfiguriert ist, das von jeder Detektionsvorrichtung (10) gelieferte Detektionssignal zu empfangen und in jedem empfangenen Detektionssignal die Impulse, die thermischen Neutronen entsprechen, und/oder die Impulse, die schnellen Neutronen entsprechen, zu identifizieren,
wobei der Rechner (12) auch dazu konfiguriert ist, für jede Detektionsvorrichtung (10) aus dem von der Detektionsvorrichtung (10) empfangenen Detektionssignal eine erste Anzahl von Koinzidenzen, abhängig von der Anzahl der realen Koinzidenzen von schnellen Spaltneutronen, die von der Detektionsvorrichtung (10) detektiert wurden, und eine zweite Anzahl von Koinzidenzen, abhängig von der Anzahl der realen Koinzidenzen von thermischen Spaltneutronen, die von der Detektionsvorrichtung (10) detektiert wurden, zu berechnen,
wobei der Rechner (12) ferner dazu konfiguriert ist, aus der ersten Anzahl von Koinzidenzen und der zweiten Anzahl von Koinzidenzen, die für zumindest einen Teil der Detektionsvorrichtungen (10) berechnet wurden, eine Position der Quelle (6) in Bezug auf einen vorbestimmten Punkt des Analysesystems (2) zu bestimmen.

2. Analysesystem (2) nach Anspruch 1, wobei der Rechner (12) zum Berechnen der ersten Anzahl von Koinzidenzen und/oder der zweiten Anzahl von Koinzidenzen entsprechend jeder Detektionsvorrichtung (10) für Folgendes konfiguriert ist:
- Bestimmen einer ersten Rossi-Alpha-Verteilung, die den Impulsen zugewiesen ist, die nur schnellen Neutronen entsprechen, und/oder Bestimmen einer zweiten Rossi-Alpha-Verteilung, die den Impulsen zugewiesen ist, die nur thermischen Neutronen entsprechen, anhand des von der Detektionsvorrichtung (10) empfangenen Detektionssignals; und
- Bestimmen aus der ersten Rossi-Alpha-Verteilung einer Anzahl von gemeinsamen Koinzidenzen von schnellen Neutronen und eine Anzahl von zufälligen Koinzidenzen von schnellen Neutronen und Zuordnen der ersten Anzahl von Koinzidenzen das Ergebnis der Differenz zwischen der Anzahl der gemeinsamen Koinzidenzen von schnellen Neutronen und der Anzahl der zufälligen Koinzidenzen von schnellen Neutronen; und/oder
- Bestimmen aus der zweiten Rossi-Alpha-Verteilung einer Anzahl von gemeinsamen Koinzidenzen von thermischen Neutronen und einer Anzahl von zufälligen Koinzidenzen von thermischen Neutronen und Zuordnen der zweiten Anzahl von Koinzidenzen das Ergebnis der Differenz zwischen der Anzahl der gemeinsamen Koinzidenzen von thermischen Neutronen und der Anzahl der zufälligen Koinzidenzen von thermischen Neutronen.

3. Analysesystem nach Anspruch 2, wobei der Rechner (12) für Folgendes konfiguriert ist:
- Zuordnen, für jede erste Rossi-Alpha-Verteilung, der Anzahl der gemeinsamen Koinzidenzen von schnellen Neutronen eine Anzahl von Detektionskoinzidenzen, die in einem ersten vorbestimmten Messfenster ([R₁+A₁]) der ersten Rossi-Alpha-Verteilung gezählt werden, und Zuordnen der Anzahl der zufälligen Koinzidenzen von schnellen Neutronen eine Anzahl von Detektionskoinzidenzen, die in einem ersten Kontrollfenster ([A₁]) gezählt werden, das die gleiche Breite wie das erste Messfenster ([R₁+A₁]) hat und sich hinter dem ersten Messfenster ([R₁+A₁]) befindet; und
- Zuordnen, für jede zweite Rossi-Alpha-Verteilung, der Anzahl der gemeinsamen Koinzidenzen von thermischen Neutronen eine Anzahl von Detektionskoinzidenzen, die in einem zweiten vorbestimmten Messfenster ([R₂+A₂]) der zweiten Rossi-Alpha- Verteilung gezählt werden, und Zuordnen der Anzahl der zufälligen Koinzidenzen von thermischen Neutronen eine Anzahl von Detektionskoinzidenzen, die in einem zweiten Kontrollfenster ([A₂]) gezählt werden, das die gleiche Breite wie das zweite Messfenster ([R₂+A₂]) hat und sich hinter dem zweiten Messfenster befindet.

4. Analysesystem (2) nach einem der Ansprüche 1 bis 3, wobei jede Detektionsvorrichtung (10) mindestens einen Detektor (14) mit einer Eingangsfläche (17) umfasst, wobei jede Eingangsfläche (17) in Richtung eines gleichen, vorbestimmten Volumens von Interesse ausgerichtet ist.

5. Analysesystem (2) nach Anspruch 4, wobei zumindest ein Teil der Detektionsvorrichtungen (10) ringförmig angeordnet sind, um einen Detektionsring (18) zu bilden, der das Volumen von Interesse radial begrenzt.

6. Analysesystem nach Anspruch 5, wobei die Detektionsvorrichtungen (10) angeordnet sind, um eine Vielzahl von Detektionsringen (18, 18A, 18B, 18C) zu bilden, die jeweils das Volumen von Interesse radial begrenzen, wobei die Detektionsvorrichtungen (10) eines gegebenen Detektionsrings (18, 18A, 18B, 18C) von den Detektionsvorrichtungen (10) eines anderen Detektionsrings (18, 18A, 18B, 18C) getrennt ist.

7. Analysesystem nach Anspruch 6, wobei die Detektionsringe (18, 18A, 18B, 18C) koaxial und nicht konzentrisch sind.

8. Analysesystem nach einem der Ansprüche 1 bis 7, wobei der Rechner (12) auch dazu konfiguriert ist, aus der ersten Anzahl von Koinzidenzen und/oder aus der zweiten Anzahl von Koinzidenzen, die für mindestens einen Teil der Detektionsvorrichtungen (10) berechnet wurden, eine Masse und/oder eine Dosisleistung der Quelle (6) zu bestimmen.

9. Verfahren zur Analyse von Gebinden (4) mit radioaktiven Abfällen, die eine Neutronenquelle (6) umfassen, wobei das Analyseverfahren Folgendes umfasst:
- Identifizieren der Impulse, die thermischen Neutronen entsprechen, und/oder der Impulse, die schnellen Neutronen entsprechen, in einem von jeder einer Vielzahl von Detektionsvorrichtungen (10) empfangenen Detektionssignal, wobei mindestens eine Detektionsvorrichtung (10) dazu konfiguriert ist, schnelle Neutronen zu detektieren, und mindestens eine Detektionsvorrichtung (10) dazu konfiguriert ist, thermische Neutronen zu detektieren, wobei jedes Detektionssignal Impulse umfasst, die jeweils für die Detektion eines entsprechenden, von der Quelle (6) stammenden Neutrons repräsentativ sind;
- Berechnen einer ersten Anzahl von Koinzidenzen, abhängig von der Anzahl der realen Koinzidenzen von schnellen Spaltneutronen, die von der Detektionsvorrichtung (10) detektiert wurden, und einer zweiten Anzahl von Koinzidenzen, abhängig von der Anzahl der realen Koinzidenzen von thermischen Spaltneutronen, die von der Detektionsvorrichtung (10) detektiert wurden, für jede Detektionsvorrichtung (10) aus dem von der Detektionsvorrichtung (10) empfangenen Detektionssignal, und
- Bestimmen einer Position der Quelle (6) in Bezug auf einen vorbestimmten Punkt aus der ersten Anzahl von Koinzidenzen und der zweiten Anzahl von Koinzidenzen, die für zumindest einen Teil der Detektionsvorrichtungen (10) berechnet wurden.

10. Computerprogrammprodukt, umfassend Programmcodeanweisungen, die, wenn sie von einem Computer ausgeführt werden, das Analyseverfahren nach Anspruch 9 implementieren.

## Claims

1. A system (2) for analysing radioactive waste packages (4) comprising a neutron source (6), the analysis system (2) including a plurality of detection devices (10) and a calculator (12), the analysis system (2) being **characterised in that**
at least one detection device (10) is configured to detect fast neutrons, and at least one detection device (10) is configured to detect thermal neutrons, each detection device (10) being configured to deliver an electrical detection signal comprising pulses each being representative of the detection of a respective neutron coming from the source (6),
the calculator (12) being configured to receive the detection signal delivered by each detection device (10) and to identify, in each detection signal received, pulses corresponding to thermal neutrons and/or pulses corresponding to fast neutrons,
the calculator (12) being also configured to calculate, for each detection device (10), from the detection signal received from the detection device (10), a first number of coincidences, depending on the number of real coincidences of fission fast neutrons detected by the detection device (10), and a second number of coincidences, depending on the number of real coincidences of fission thermal neutrons detected by the detection device (10),
the calculator (12) being further configured to determine a position of the source (6) relative to a predetermined point of the analysis system (2) from the first number of coincidences and the second number of coincidences calculated for at least one part of the detection devices (10).

2. The analysis system (2) according to claim 1, wherein, to calculate the first number of coincidences and/or the second number of coincidences corresponding to each detection device (10), the calculator (12) is configured to:
- from the detection signal received from the detection device (10), determine a first Rossi-alpha distribution associated with pulses corresponding to fast neutrons alone, and/or determine a second Rossi-alpha distribution associated with pulses corresponding to thermal neutrons alone; and
- determine, from the first Rossi-alpha distribution, a number of joint coincidences of fast neutrons and a number of accidental coincidences of fast neutrons, and assign to the first number of coincidences the result of the difference between the number of joint coincidences of fast neutrons and the number of accidental coincidences of fast neutrons; and/or
- determine, from the second Rossi-alpha distribution, a number of joint coincidences of thermal neutrons and a number of accidental coincidences of thermal neutrons, and assign to the second number of coincidences the result of the difference between the number of joint coincidences of thermal neutrons and the number of accidental coincidences of thermal neutrons.

3. The analysis system according to claim 2, wherein the calculator (12) is configured so as to:
- for each first Rossi-alpha distribution, assign to the number of joint coincidences of fast neutrons a number of detection coincidences counted in a predetermined first measurement window ([R₁+A₁]) of the first Rossi-alpha distribution, and assign to the number of accidental coincidences of fast neutrons a number of detection coincidences counted in a first control window ([A₁]) having the same width as the first measurement window ([R₁+A₁]), located beyond the first measurement window ([R₁+A₁]); and
- for each second Rossi-alpha distribution, assign to the number of joint coincidences of thermal neutrons a number of detection coincidences counted in a predetermined second measurement window ([R₂+A₂]) of the second Rossi-alpha distribution, and assign to the number of accidental coincidences of thermal neutrons a number of detection coincidences counted in a second control window ([A₂]) having the same width as the second measurement window ([R₂+A₂]), located beyond the second measurement window ([R₂+A₂]).

4. The analysis system (2) according to any of claims 1 to 3, wherein each detection device (10) comprises at least one detector (14) having an inlet face (17), each inlet face (17) facing a same predetermined volume of interest.

5. The analysis system (2) according to claim 4, wherein at least one part of the detection devices (10) are arranged as an annulus to form a detection ring (18) radially delimiting the volume of interest.

6. The analysis system according to claim 5, wherein the detection devices (10) are arranged to form a plurality of detection rings (18, 18A, 18B, 18C) each radially delimiting the volume of interest, the detection devices (10) of a given detection ring (18, 18A, 18B, 18C) being distinct from the detection devices (10) of another detection ring (18, 18A, 18B, 18C).

7. The analysis system according to claim 6, wherein the detection rings (18, 18A, 18B, 18C) are coaxial and non-concentric with each other.

8. The analysis system according to any of claims 1 to 7, wherein the calculator (12) is also configured to determine a mass and/or a dose flow rate of the source (6) from the first number or coincidences and/or the second number of coincidences calculated for at least one part of the detection devices (10).

9. A method for analysing radioactive waste packages (4) comprising a neutron source (6), the analysis method comprising:
- in a detection signal received from each of a plurality of detection devices (10), at least one detection device (10) being configured to detect fast neutrons, and at least one detection device (10) being configured to detect thermal neutrons, each detection signal comprising pulses each being representative of the detection of a respective neutron coming from the source (6), identifying pulses corresponding to thermal neutrons and/or pulses corresponding to fast neutrons;
- calculating, for each detection device (10), from the detection signal received from the detection device (10), a first number of coincidences, depending of the number of real coincidences of fission fast neutrons detected by the detection device (10), and a second number of coincidences, depending of the number of real coincidences of fission thermal neutrons detected by the detection device (10); and
- determining a position of the source (6) relative to a predetermined point from the first number of coincidences and the second number of coincidences calculated for at least one part of the detection devices (10).

10. A computer program-product comprising program code instructions which, when executed by a computer, implement the analysis method according to claim 9.
